# EUROPÄISCHE PATENTSCHRIFT

(11) **EP 2 774 810 B1**
(45) Veröffentlichungstag und Bekanntmachung des Hinweises auf die Patenterteilung: **11.04.2018**
(21) Anmeldenummer: 14156514.3
(22) Anmeldetag: 25.02.2014
(51) Int. Cl.: B60P 1/43, A61G 3/06

(54) **Rampensystem zum Einbau in ein Fahrzeug**
Ramp system to be fitted in a vehicle
Système de rampes destiné à être intégré dans un véhicule

(30) Priorität: 07.03.2013 DE 202013002152 U
(43) Veröffentlichungstag der Anmeldung: 10.09.2014
(73) Patentinhaber: AMF-Bruns GmbH & Co. KG, 26689 Apen (DE)
(72) Erfinder: Bruns, Gerit, 26160 Bad Zwischenahn (DE)
(74) Vertreter: Eisenführ Speiser

(56) Entgegenhaltungen:
- WO-A1-2010/003387
- US-B1- 8 635 729

## Beschreibung

Die Erfindung betrifft ein Rampensystem zum Einbau in ein Fahrzeug, welches die Auffahrt eines fahrbaren Gegenstands, insbesondere eines Rollstuhls, in einen Innenraum des Fahrzeugs ermöglicht, mit mindestens einem Zwischenelement, welches mit dem Fahrzeug gekoppelt ist und einer Auffahrplatte, welche mit dem mindestens einen Zwischenelement gekoppelt ist, wobei die Auffahrplatte mittels einer Rotationsbewegung um eine erste bewegliche Schwenkachse von einer vertikalen Transportposition in eine horizontale Stauposition verbringbar ist.

Derartige Rampensysteme werden seit einiger Zeit in PKWs und Kleintransporter eingebaut, um einerseits bei Bedarf die Möglichkeit zu haben, einem Rollstuhlfahrer eine unkomplizierte und einfache Auffahrt in den Innenraum bzw. den Transportbereich des Fahrzeugs zu ermöglichen, und andererseits ausreichend Stauraum und eine nutzbare Bodenfläche in dem Transportfahrzeug zu haben, wenn kein Rollstuhlfahrer transportiert wird.

Bekannte Rampensysteme, siehe zum Beispiel US 8 635 729 B1 oder WO 2010/003387 A1, sind dabei meist zwischen drei Positionen verfahrbar. In einer ersten Auffahrposition ist die Auffahrplatte gegenüber einer Horizontalen geneigt und überbrückt somit den Höhenunterschied zwischen der bodenseitigen Einfahrkante des Fahrzeuginnenraums und der Straßen- bzw. Gehwegebene. Die geneigte Auffahrplatte erlaubt es dem Rollstuhlfahrer selbstständig oder mithilfe des Pflegepersonals in den Transportinnenraum des Fahrzeugs einzurollen.

Die Auffahrplatte wird nach der Einfahrt des Rollstuhlfahrers in eine Transportposition gebracht, in der die Auffahrplatte im Wesentlichen vertikal angeordnet ist. Nach Erreichen des Zielortes kann die Auffahrplatte erneut von der vertikalen Transportposition in die gegenüber einer Horizontalen geneigten Auffahrposition bewegt werden, um dem Rollstuhlfahrer den Ausstieg aus dem Transportfahrzeug zu ermöglichen.

Wird das mit einem derartigen Rampensystem ausgestattete Fahrzeug nicht zur Beförderung von Rollstuhlfahrern verwendet, kann die Auffahrplatte des Rampensystems in eine liegende Stauposition gebracht werden. In dieser Stauposition liegt die Auffahrplatte im Bodenbereich des Fahrzeuginnenraums, sodass ein Großteil des Stauraums wieder zur Verfügung steht.

Um die Neigung der Auffahrplatte in der Auffahrposition gering zu halten, versucht man eine Einfahrkante im Fahrzeuginnenraum, über die der Rollstuhlfahrer in den Innenraum einfährt, möglichst tief anzuordnen. Sie ist regelmäßig unterhalb des innenseitigen Fahrzeugbodens, auf dem beispielsweise die Fahrzeugsitze montiert sind, angeordnet. Damit die Auffahrplatte in der Stauposition in etwa auf einer Ebene mit dem innenseitigen Fahrzeugboden liegt, benötigen derartige Rampensysteme Zwischenelemente, welche den Höhenunterschied zwischen der Einfahrkante und dem innenseitigen Fahrzeugboden ausgleichen können. Hierzu werden bei bekannten Rampensystemen oftmals eine Vielzahl von mechanischen Elementen verwendet Dabei finden bei bekannten Rampensystemen verschachtelte Kulissenführungen Anwendung. Die Kombination aus einer hohen Teileanzahl und einer komplizierten Mechanik führt zu einem erhöhten Ausfallrisiko bzw. zu einem erhöhten Risiko von Funktionsstörungen oder -fehlern. Ferner führen die bekannten mechanischen Umsetzungen durch verschachtelte Kulissenführungen zu einem erhöhten Verletzungsrisiko während der Benutzung derartiger Rampensysteme. Durch die Teilevielzahl ist außerdem der benötigte Bauraum erhöht. Außerdem bedarf die komplizierte Mechanik oftmals nicht-fertigungsoptimierte Bauteile, wodurch die Herstellungskosten derartiger Rampensysteme erhöht sind.

Der Erfindung liegt die Aufgabe zu Grunde, die oben genannten Nachteile zumindest teilweise zu vermindern und ein Rampensystem und ein Fahrzeug mit einem Rampensystem anzugeben, welche es erlauben das Fahrzeug neben der Beförderung von Rollstuhlfahrern auch anderweitig ohne Stauraumeinbußen nutzen zu können.

Die Aufgabe wird einem ersten Aspekt von einem Rampensystem der eingangs genannten Art gelöst, wobei an der Auffahrplatte mindestens ein Führungszapfen angeordnet ist, welcher in einer Längsführung in dem mindestens einen Zwischenelement geführt ist und mindestens eine Führungsstrebe zwischen dem Zwischenelement und der Auffahrplatte angelenkt ist. Die Auffahrplatte ist somit gegenüber dem Zwischenelement durch den Führungszapfen in der Längsführung des Zwischenelements geführt und somit relativ zu diesem bewegbar. In Verbindung mit der Führungsstrebe kann die Rotationsbewegung der Auffahrplatte um die erste bewegliche Schwenkachse durch eine im Vergleich zum Stand der Technik einfache und unkomplizierte Mechanik mit einer geringen Teileanzahl ausgeführt werden.

In einer ersten bevorzugten Ausführungsform des erfindungsgemäßen Rampensystems ist die Auffahrplatte mittels einer Rotationsbewegung um eine zweite Schwenkachse von einer geneigten Auffahrposition in die vertikale Transportposition verbringbar. Die erste bewegliche Schwenkachse und die zweite Schwenkachse ermöglichen die Montage des Rampensystems in einer gegenüber dem Boden des Fahrzeuginnenraums abgesenkten Ebene und somit einen moderaten Neigungswinkel der Auffahrplatte in der Auffahrposition und das ebene Abschließen der Auffahrplatte mit dem innenseitigen Fahrzeugboden in der Stauposition. Die Neigung der Auffahrplatte in der Auffahrposition ist dabei abhängig von dem Verhältnis zwischen dem von der Rampe zu überbrückenden Höhenunterschied und der Länge der Auffahrplatte.

In einer zweiten bevorzugten Ausführungsform ist die Auffahrplatte mit vorzugsweise nur zwei Zwischenelementen gekoppelt, welche jeweils nur eine Längsführung aufweisen und gegenüberliegend an den Außenflächen der Auffahrplatte angeordnet sind. In dieser Ausführungsform sind an der Auffahrplatte zwei gegenüberliegende Führungszapfen angeordnet, welche jeweils in vorzugsweise nur einer Längsführung eines Zwischenelements geführt werden. Durch die beidseitige Führung der Auffahrplatte wird eine gesteigerte Stabilität und somit eine erhöhte Lebensdauer erreicht.

In einer weiteren bevorzugten Ausführungsform des erfindungsgemäßen Rampensystems sind die zwei Zwischenelemente durch eine Zwischenplatte gekoppelt. Die Zwischenplatte ist in der Auffahrposition und in der Transportposition der Auffahrplatte parallel zu der Auffahrplatte angeordnet und kommt vorzugsweise mit der Auffahrplatte in Kontakt. Die Zwischenplatte ist dabei derart von der Auffahrplatte beabstandet ausgerichtet, dass diese die Auffahrplatte ohne das Vorhandensein eines Schlitzes verlängert. Vorzugsweise ist die Zwischenplatte senkrecht zu Auffahrplatte angeordnet, wenn sich die Auffahrplatte in der Stauposition befindet.

Das erfindungsgemäße Rampensystem wird durch zwei Führungsstreben vorteilhaft weitergebildet, welche parallel verlaufen und gegenüberliegend an den Außenflächen der Auffahrplatte angeordnet sind. Das beidseitige Vorhandensein von Führungsstreben wirkt sich positiv auf die Stabilität des Rampensystems während dem Verfahren der Auffahrrampe zwischen den verschiedenen Positionen aus. In Kombination mit den beidseitig vorhandenen Zwischenelementen und den in deren Längsführung eingreifenden beidseitig angebrachten Führungszapfen ist auch die Führungspräzision der Auffahrplatte verbessert.

In einer weiteren bevorzugten Ausführungsform stimmt die erste bewegliche Schwenkachse mit der horizontalen Mittelachse des Führungszapfens oder der Führungszapfen überein. Die Ausrichtung und Anordnung der ersten beweglichen Schwenkachse wird folglich von den Längsführungen der Zwischenelemente begrenzt.

In einer weiteren bevorzugten Ausführungsform des erfindungsgemäßen Rampensystems ist die mindestens eine Führungsstrebe in der Transportposition entlang einer Vertikalen angeordnet. Vorzugsweise ist die mindestens eine Führungsstrebe in der Stauposition gegenüber einer Vertikalen geneigt angeordnet, wobei die mindestens eine Führungsstrebe in der Auffahrposition vorzugsweise die gleiche Neigung gegenüber einer Horizontalen aufweist wie die Auffahrplatte. In der Auffahrposition und in der Transportposition ist die Führungsstrebe also parallel zu der Mittelachse der Auffahrplatte ausgerichtet, sodass hierdurch eine platzsparende Umsetzung der Bewegungsmechanik ermöglicht wird. In der Stauposition wird die Auffahrplatte durch die geneigte Anordnung der Führungsstrebe besonders vorteilhaft abgestützt, sodass diese auch ohne weitere Lager- oder Stützelemente belastbar ist. Da keine weiteren Stütz- oder Lagerelemente notwendig sind, ist das Rampensystem einerseits weiter vereinfacht und andererseits trotzdem mit Lasten beaufschlagbar.

In einer weiteren bevorzugten Ausführungsform des erfindungsgemäßen Rampensystems liegt die mindestens eine Führungsstrebe in der Transportposition und in der Auffahrposition auf dem mindestens einen Zwischenelement auf. Durch das Aufliegen wird einerseits der Platzbedarf verringert und andererseits das Verletzungsrisiko reduziert, da das Risiko von Hand- oder Fingerquetschungen vermindert ist.

Das erfindungsgemäße Rampensystem wird dadurch vorteilhaft weitergebildet, dass die vertikalen Außenflächen der Führungsstreben und die seitlichen Außenflächen der Auffahrplatte in der gleichen Ebene angeordnet sind. Abhängig von der Stärke der Führungsstreben und der Ausgestaltung der Außenflächen der Auffahrplatte kann somit eine schlanke Umsetzung des Bewegungsmechanismus erreicht werden, sodass der Platzbedarf für den Bewegungsmechanismus verringert ist und/oder einer verbreiterte Auffahrplatte bei dieser Ausführungsform Verwendung finden kann.

In einer weiteren vorteilhaften Ausführungsform des erfindungsgemäßen Rampensystems weisen ein Zwischenelement und eine Führungsstrebe, welche auf der gleichen Seite der Auffahrplatte angeordnet sind, zusammen eine Breite von unter 20 mm, besonders bevorzugt unter 15 mm auf.

Das erfindungsgemäße Rampensystem wird dadurch vorteilhaft weitergebildet, dass der mindestens eine Führungszapfen in der Transportposition und in der Auffahrposition in einer ersten Endposition in der mindestens einen Längsführung angeordnet ist. Unter einer Endposition ist eine Position zu verstehen, in der der Führungszapfen eine ausgeführte Bewegung in der Längsführung nicht weiter fortsetzen kann, da die Bewegung durch das Vorhandensein einer Endkante formschlüssig begrenzt ist. Vorzugsweise ist der mindestens eine Führungszapfen in der Stauposition in einer zweiten Endposition in der mindestens einen Längsführung angeordnet. Die Längsführung vermag es folglich den Führungszapfen zwischen der ersten Endposition und der zweiten Endposition zu führen.

In einer weiteren bevorzugten Ausführungsform des erfindungsgemäßen Rampensystems ist die mindestens eine Längsführung teilweise gebogen ausgebildet. Durch die gebogene Ausgestaltung der Längsführung wird die Bewegung der Auffahrplatte beim Verfahren zwischen den beiden verschiedenen Positionen beeinflusst. Durch die gebogene Führung können einerseits Verklemmungen der Auffahrplatte mit anderen Teilen des Rampensystems und/oder des Fahrzeugs vermieden werden und andererseits die Spaltöffnung zwischen der Zwischenplatte und der Auffahrplatte in der Stauposition verkleinert werden.

Das erfindungsgemäße Rampensystem wird dadurch vorteilhaft weitergebildet, dass die mindestens eine Längsführung an einem Ende einen Endsitz aufweist, welcher vorzugsweise durch einen 90 ° Bogen in der Längsführung ausgebildet ist. Der Endsitz erlaubt das formschlüssige Positionieren und/oder Einrasten des Führungszapfens in der Stauposition, sodass die Auffahrplatte derart in der horizontalen Ausrichtung gesichert ist, dass diese durch Beaufschlagung mit Vertikalkräften nicht aus dieser Position gebracht werden kann. Dies erlaubt ein sicheres Beladen der Auffahrrampe in der Stauposition, ohne die Gefahr, dass sich die Auffahrplatte durch die Beaufschlagung mit Vertikalkräften durch die Beladung der Auffahrplatte mit Gegenständen in eine andere Position verfährt.

Besonders vorteilhaft wird das erfindungsgemäße Rampensystem dadurch weitergebildet, dass die Auffahrplatte in der Transportposition verriegelbar ist. Dies verhindert unbeabsichtigte Bewegungen der Auffahrplatte. Folglich wird die Sicherheit bei der Verwendung des Rampensystems erhöht.

Das erfindungsgemäße Rampensystem wird dadurch vorteilhaft weitergebildet, dass ein erster Verriegelungsmechanismus das Verfahren der Auffahrplatte von der Transportposition in die Auffahrposition sperrt und freigibt und/oder ein zweiter Verriegelungsmechanismus das Verfahren der Auffahrplatte von der Transportposition in die Stauposition sperrt und freigibt. Durch die zwei separaten Verriegelungsmechanismen wir die Betriebssicherheit erhöht und das Ausfallrisiko des Rampensystems reduziert.

In einer besonders bevorzugten Ausführungsform des erfindungsgemäßen Rampensystems ist der erste Verriegelungsmechanismus über ein ersten Betätigungshebel einstellbar und der zweite Verriegelungsmechanismus über einen zweiten Betätigungshebel einstellbar. Die separaten Betätigungshebel, welche manuell bedient werden können, erhöhen den Benutzungskomfort des Rampensystems und ermöglichen eine schnelle und unkomplizierte Handhabung.

In einem zweiten Aspekt wird die der Erfindung zu Grunde liegenden Aufgabe durch ein Fahrzeug zur Beförderung von Rollstuhlfahrern gelöst, welches ein Rampensystem gemäß einem der Ansprüche 1 bis 15 aufweist.

Weitere Merkmale und Vorteile der Erfindung ergeben sich aus dem beigefügten Ansprüchen und der nachfolgenden Beschreibung, in der ein Ausführungsbeispiel anhand schematischer Zeichnungen im Einzelnen erläutert wird. Dabei zeigt:
- Fig. 1: das Ausführungsbeispiel des erfindungsgemäßen Rampensystems in der Auffahrposition in Verbindung mit einem erfindungsgemäßen Fahrzeug in einer perspektivischen Darstellung;
- Fig. 2: eine Detailansicht des Rampensystems in der Auffahrposition;
- Fig. 3: das Rampensystem in der Auffahrposition in Verbindung mit dem Fahrzeug in der Seitenansicht;
- Fig. 4: eine Detaildarstellung des Rampensystems in der Seitenansicht;
- Fig. 5: das Rampensystem in der Transportposition in Verbindung mit dem Fahrzeug in einer perspektivischen Darstellung;
- Fig. 6: eine Detaildarstellung des Rampensystems in der Transportposition in einer perspektivischen Darstellung,
- Fig. 7: das Rampensystem in der Transportposition in Verbindung mit dem Fahrzeug in der Seitenansicht;
- Fig. 8: eine Detaildarstellung des Rampensystems in der Transportposition in der Seitenansicht;
- Fig. 9: das Rampensystem der Stauposition in Verbindung mit dem Fahrzeug in einer perspektivischen Darstellung;
- Fig. 10: eine Detaildarstellung des Rampensystems in der Stauposition;
- Fig. 11: das Rampensystem in der Stauposition in Verbindung mit dem Fahrzeug in einer Seitenansicht; und
- Fig. 12: eine Detaildarstellung des Rampensystems in der Stauposition in der Seitenansicht.

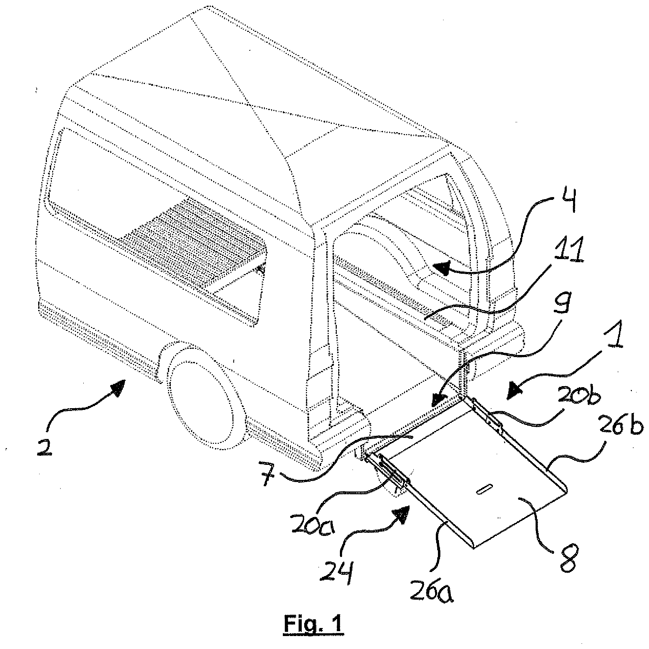

Fig. 1 zeigt ein Rampensystem 1, welches in ein Fahrzeug 2 eingebaut ist. Eine Auffahrplatte 8 des Rampensystems 1 befindet sich dabei in einer geneigten Auffahrposition 24. In der geneigten Auffahrposition 24 ist die Auffahrplatte 8 gegenüber einer vertikalen Ebene geneigt und überbrückt somit den Höhenunterschied zwischen der Straße oder dem Gehweg auf dem sich das Fahrzeug 2 befindet und einer abgesenkten Einfahrkante 9 des Innenraums 4 des Fahrzeugs 2. Die abgesenkte Einfahrkante 9 ist dabei tiefer angeordnet als der innenseitige Fahrzeugboden 11, auf welchem beispielsweise der Fahrer- und Beifahrersitz montiert ist. Dieser Höhenunterschied ist bedingt durch eine rampenartige Auffahrt im Innenraum 4 des Fahrzeugs 2, welche im Wesentlichen die gleiche Neigung aufweist, wie die Auffahrplatte 8 des Rampensystems 1 in der Auffahrposition 24. Zwischen der Auffahrplatte 8 und der abgesenkten Einfahrkante 9 ist eine Zwischenplatte 7 angeordnet. Die Zwischenplatte 7 verbindet die beidseitig vorhandenen Zwischenelemente 6a, 6b (nicht in Fig. 1 beziffert) miteinander. Die Zwischenelemente 6a, 6b sind mittels Führungsstreben 20a, 20b mit der Auffahrplatte 8 bzw. den Außenflächen 26a, 26b der Auffahrplatte 8 verbunden.

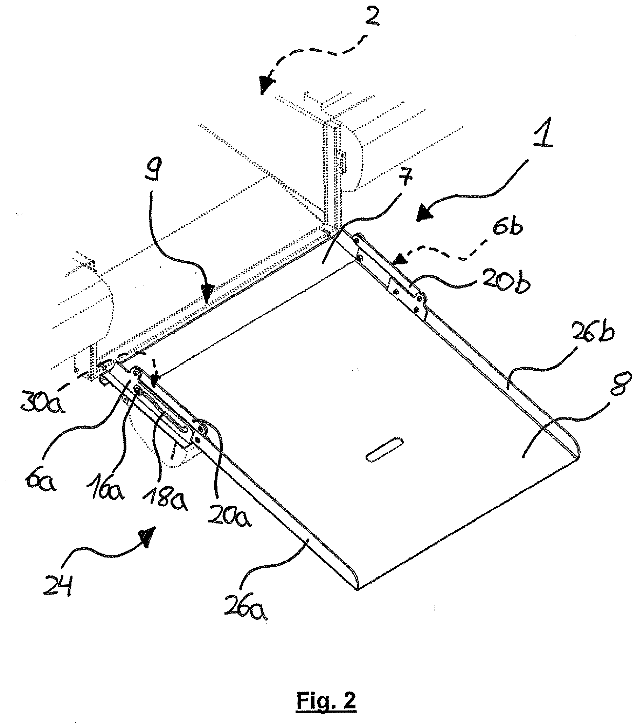

In Fig. 2 wird deutlich, dass die Zwischenelemente 6a, 6b nicht nur über die Führungsstreben 20a, 20b mit der Auffahrplatte 8 verbunden sind, sondern ebenfalls durch Längsführungen 18a, 18b (18b verdeckt), welche an den Zwischenelementen 6a, 6b angeordnet sind, in welche Führungszapfen 16a, 16b (16b verdeckt) eingreifen, welche wiederum mit der Auffahrplatte 8 gekoppelt sind. Auffahrplatte 8 und Zwischenplatte 7 sind konstant geneigt, im Beispiel zwischen etwa 15 und 25°. Die Zwischenplatte 7 schließt dabei auf der einen Seite bündig mit der abgesenkten Einfahrkante 9 des Fahrzeugs 2 ab. Die Außenflächen 30a, 30b (30b verdeckt) der Führungsstreben 20a, 20b sind dabei im Wesentlichen in der gleichen vertikalen Ebene angeordnet wie die Außenflächen 26a, 26b der Auffahrplatte 8.

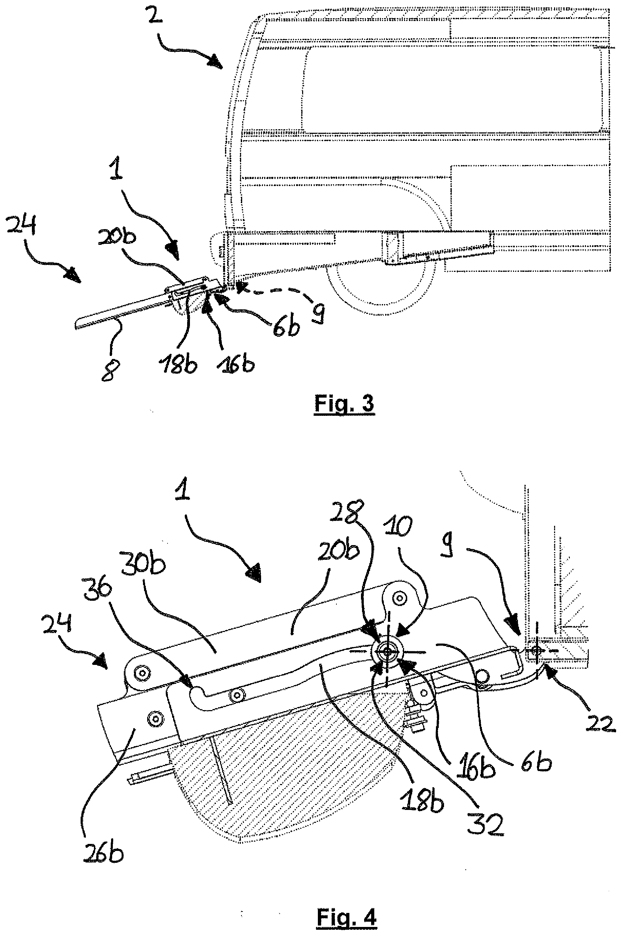

Die in Fig. 3 dargestellte Seitenansicht verdeutlicht die Neigung der Auffahrplatte 8 gegenüber der horizontalen Ebene in der dargestellten geneigten Auffahrposition 24.

Der Funktionsmechanismus des Rampensystems 1 ist in Fig. 4 in einer Detaildarstellung in der Seitenansicht abgebildet. Eine erste bewegliche Schwenkachse 10 stimmt in diesem Ausführungsbeispiel mit der Mittelachse 28 der Führungszapfen 16a, 16b überein. In der dargestellten geneigten Auffahrposition 24 der Auffahrplatte 8 befinden sich die Führungszapfen 16a, 16b in einer ersten Endposition 32 in den Längsführungen 18a, 18b. Die Längsführungen 18a, 18b sind teilweise gebogen bzw. gekrümmt ausgeführt und weisen an ihrem einen Ende einen Endsitz 36 auf, welcher durch einen 90° Bogen bzw. eine 90° Knickung der Längsführungen 18a, 18b ausgebildet ist. Die Zwischenelemente 6a, 6b sind dabei mit dem Fahrzeug schwenkbar gekoppelt, wobei die Schwenkbewegung der Zwischenelemente 6a, 6b um die zweite Schwenkachse 22 ausführbar ist.

Durch die Kopplung der Auffahrplatte 8 mit den Zwischenelementen 6a, 6b durch die Führungszapfen 16a, 16b und die Kombination aus Längsführungen 18a, 18b und Führungszapfen 16a, 16b kommt es bei einem Schwenken der Zwischenelemente 6a, 6b um die zweite Schwenkachse 22 auch zu einem Schwenken der Auffahrplatte 8 um die zweite Schwenkachse 22.

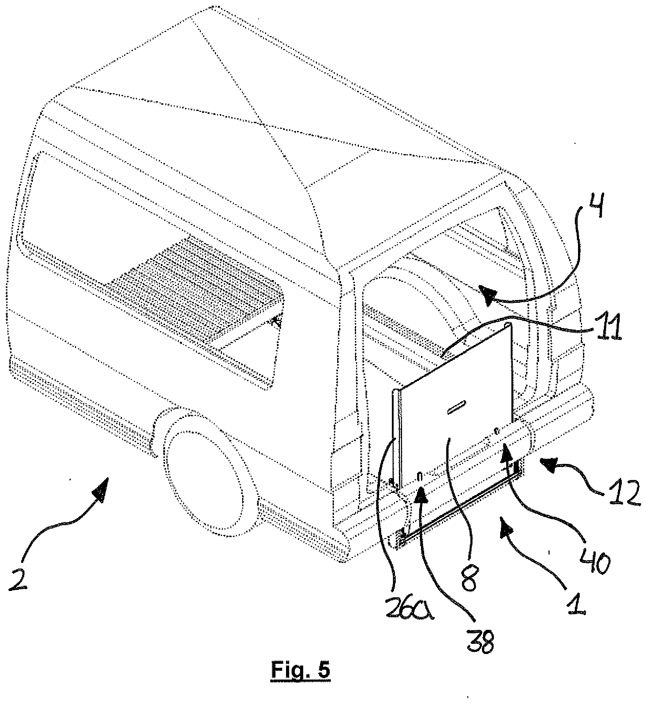

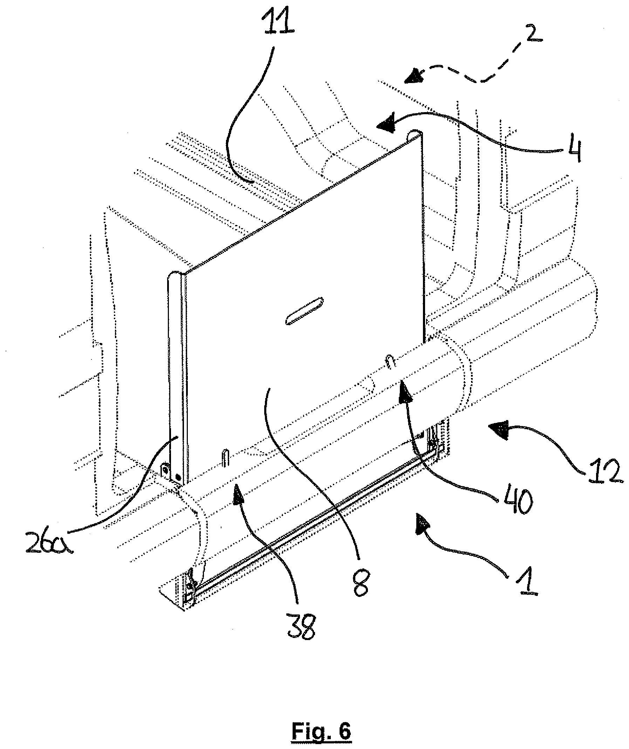

Durch das Schwenken der Auffahrplatte 8 kann die in Fig. 5 und 6 dargestellte Transportposition 12 der Auffahrplatte 8 eingestellt werden. Die Auffahrplatte 8 ist in der Transportposition 12 im Wesentlichen vertikal ausgerichtet. In dieser Darstellung sind der erste Betätigungshebel 38 und der zweite Betätigungshebel 40 in einer zu der Auffahrplatte 8 parallelen Ebene angeordnet, welche in Richtung des hinteren Fahrzeugabschlusses von der Auffahrplatte 8 beabstandet ist.

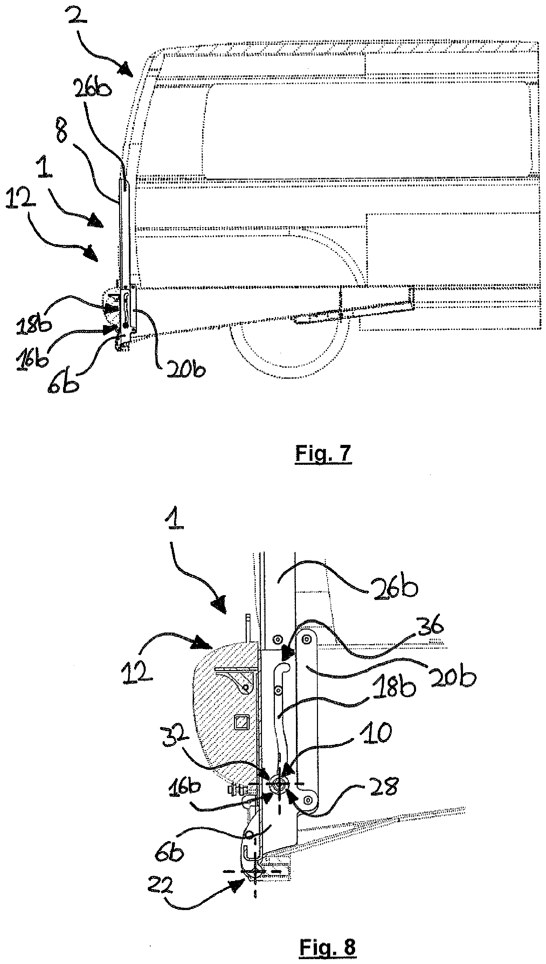

Die Seitenansichten des Rampensystems 1 in Fig. 7 und in Fig. 8 verdeutlichen die vertikale Ausrichtung der Auffahrplatte 8 in der Transportposition 12. Da es beim Schwenken von der geneigten Auffahrposition 24 in die Transportposition 12 lediglich zu einer Rotationsbewegung der Auffahrplatte 8 um die zweite Schwenkachse 22 kommt, befinden sich die Führungszapfen 16a, 16b in der Transportposition 12 genauso wie in der geneigten Auffahrposition 24 in der ersten Endposition 32 in den Längsführungen 18a, 18b. Dementsprechend verlaufen auch die Führungsstreben 20a, 20b parallel zu den Außenflächen 26a, 26b der Auffahrplatte 8 und die Außenflächen 30a, 30b der Führungsstreben 20a, 20b verlaufen im Wesentlichen in der gleichen vertikalen Ebene wie die Außenflächen 26a, 26b der Auffahrplatte 8.

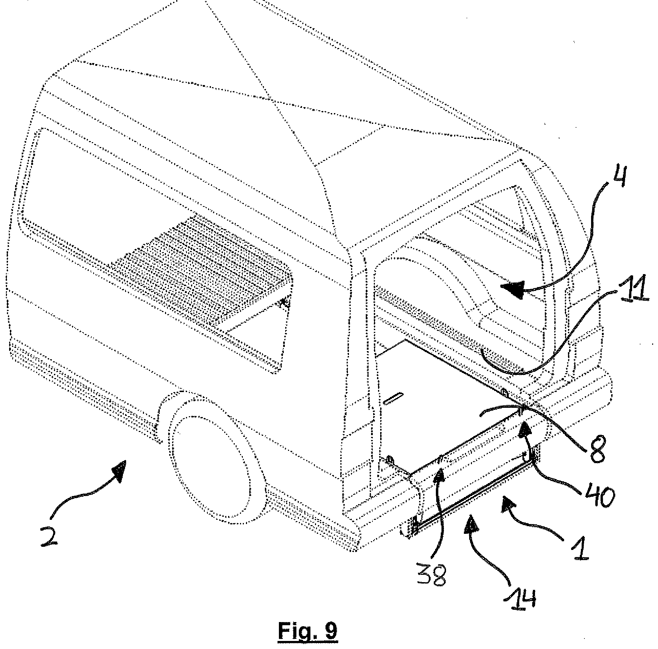

Um die Auffahrplatte von der Transportposition 12 in die Stauposition 14 zu verfahren, wird die Auffahrplatte 8 um die erste bewegliche Schwenkachse 10 bewegt. Wie in Fig. 9 gezeigt, ist die Auffahrplatte 8 in der Stauposition 14 im Wesentlichen in einer horizontalen Ebene angeordnet und schließt im Wesentlichen plan mit dem innenseitigen Fahrzeugboden 11 ab.

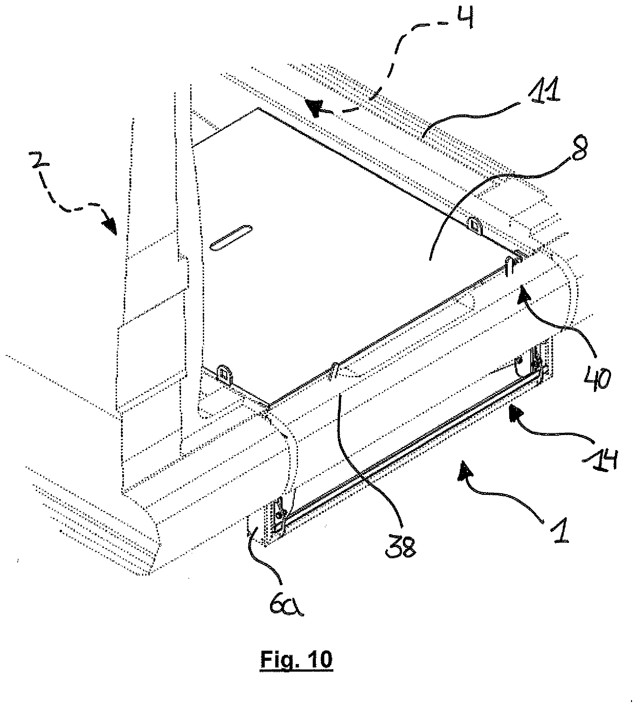

Wie in Fig. 9 und Fig. 10 angedeutet ist, verlaufen die Zwischenelemente 6a, 6b in der Stauposition 14 der Auffahrplatte 8 im Wesentlichen in vertikaler Richtung. Ebenfalls zeigt die Figur, dass die in der Stauposition 14 nach oben zeigende Oberfläche der Auffahrplatte 8 in der Stauposition 14 im Wesentlichen in der gleichen Ebene angeordnet ist wie der innenseitige Fahrzeugboden 11.

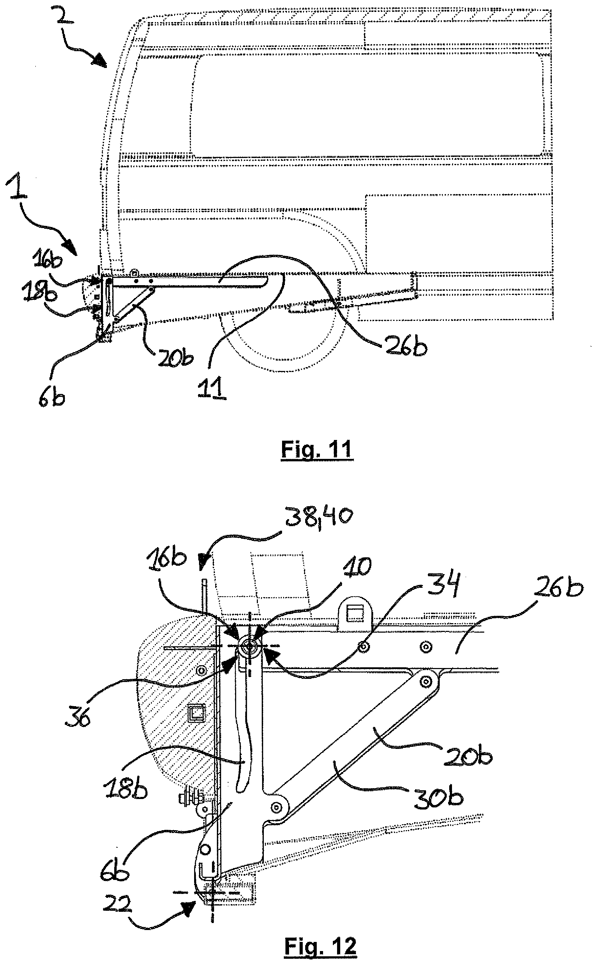

Die Seitenansichten aus Fig. 11 und Fig. 12 zeigen, dass die erste bewegliche Schwenkachse 10 und die Führungszapfen 16a, 16b sich entlang der Längsführungen 18a, 18b von der ersten Endposition 32 in die zweite Endposition 34 bewegt haben. Da die Zwischenelemente 6a, 6b bei der Positionsänderung von der Transportposition 12 in die Stauposition 14 der Auffahrplatte 8 ihre Lage nicht verändert haben, wurden die Führungsstreben 20a, 20b von ihrer vertikalen Ausrichtung in eine gegenüber der Vertikalen geneigten Ausrichtung verfahren. In der dargestellten Ausführungsform weisen die Führungsstreben 20a, 20b in der Stauposition 14 sowohl gegenüber den Zwischenelementen 6a, 6b als auch gegenüber der Auffahrplatte 8 etwa einen Winkel von 45° auf. In nicht dargestellter Weise kann die Auffahrplatte 8 in der gezeigten Stauposition 14 abgestützt sein von der Fahrzeugstruktur, vorzugsweise mittels eines Auflagers oder mehrerer Auflager.

### Bezuqszeichenliste

- 1: Rampensystem
- 2: Fahrzeug
- 4: Innenraum des Fahrzeugs
- 6a, 6b: Zwischenelement
- 7: Zwischenplatte
- 8: Auffahrplatte
- 9: abgesenkte Einfahrkante
- 10: erste bewegliche Schwenkachse
- 11: innenseitiger Fahrzeugboden
- 12: Transportposition
- 14: Stauposition
- 16a, 16b: Führungszapfen
- 18a, 18b: Längsführung
- 20a, 20b: Führungsstrebe
- 22: zweite Schwenkachse
- 24: geneigte Auffahrposition
- 26a, 26b: Außenfläche der Auffahrplatte
- 28: Mittelachse eines Führungszapfens
- 30a, 30b: Außenfläche einer Führungsstrebe
- 32: ersten Endposition des Führungszapfens
- 34: zweite Endposition des Führungszapfens
- 36: Endsitz einer Längsführung
- 38: erster Betätigungshebel
- 40: zweiter Betätigungshebel

## Patentansprüche

1. Rampensystem (1) zum Einbau in ein Fahrzeug (2), welches die Auffahrt eines fahrbaren Gegenstandes, insbesondere eines Rollstuhls, in einen Innenraum (4) des Fahrzeugs (2) ermöglicht, mit
mindestens einem Zwischenelement (6a, 6b), welches mit dem Fahrzeug (2) koppelbar ist und
einer Auffahrplatte (8), welche mit dem mindestens einen Zwischenelement (6a, 6b) gekoppelt ist, wobei die Auffahrplatte (8) mittels einer Rotationsbewegung um eine erste bewegliche Schwenkachse (10) von einer vertikalen Transportposition (12) in eine horizontale Stauposition (14) verbringbar ist, wobei mindestens ein Führungszapfen (16a, 16b) an der Auffahrplatte (8) angeordnet ist, welcher in einer Längsführung (18a, 18b) in dem mindestens einen Zwischenelement (6a, 6b) geführt ist,
**dadurch gekennzeichnet, dass** mindestens eine Führungsstrebe (20a, 20b) zwischen dem Zwischenelement (6a, 6b) und der Auffahrplatte (8) angelenkt ist.

2. Rampensystem (1) nach Anspruch 1,
**dadurch gekennzeichnet, dass** die Auffahrplatte (8) mittels einer Rotationsbewegung um eine zweite Schwenkachse (22) von einer geneigten Auffahrposition (24) in die vertikale Transportposition (12) verbringbar ist.

3. Rampensystem (1) nach Anspruch 1 oder Anspruch 2,
**dadurch gekennzeichnet, dass** die Auffahrplatte (8) mit zwei Zwischenelementen (6a, 6b) gekoppelt ist, welche gegenüberliegend an den Außenflächen (26a, 26b) der Auffahrplatte (8) angeordnet sind und zwei Führungszapfen (16a, 16b) an der Auffahrplatte (8) angeordnet sind, welche jeweils in einer Längsführung (18a, 18b) eines Zwischenelements (6a, 6b) geführt werden.

4. Rampensystem (1) nach Anspruch 3,
**dadurch gekennzeichnet, dass** die zwei Zwischenelemente (6a, 6b) mittels einer Zwischenplatte (7) gekoppelt sind, welche in der Auffahrposition (24) und in der Transportposition (12) der Auffahrplatte (8) im wesentlichen parallel zu der Auffahrplatte (8) angeordnet ist und/oder in der Stauposition (14) der Auffahrplatte (8) im wesentlichen senkrecht zu Auffahrplatte (8) angeordnet ist.

5. Rampensystem (1) nach Anspruch 3 oder Anspruch 4,
**gekennzeichnet durch** zwei Führungsstreben (20a, 20b), welche parallel verlaufen und mit der Auffahrplatte (8) und jeweils einem Zwischenelement (6a, 6b) gekoppelt sind und vorzugsweise gegenüberliegend an den Außenflächen (26a, 26b) der Auffahrplatte (8) angeordnet sind.

6. Rampensystem (1) nach einem der vorstehenden Ansprüche,
**dadurch gekennzeichnet, dass** die erste bewegliche Schwenkachse (10) mit der horizontalen Mittelachse (28) des Führungszapfens (16a, 16b) oder der Führungszapfen (16a, 16b) übereinstimmt.

7. Rampensystem (1) nach einem der vorstehenden Anspruche,
**dadurch gekennzeichnet, dass** die mindestens eine Führungsstrebe (20a, 20b) in der Transportposition (12) entlang einer Vertikalen angeordnet ist und/oder die mindestens eine Führungsstrebe (20a, 20b) in der Stauposition (14) gegenüber einer Vertikalen geneigt angeordnet ist und/oder die mindestens eine Führungsstrebe (20a, 20b) in der Auffahrposition (24) die gleiche Neigung gegenüber einer Horizontalen aufweist wie die Auffahrplatte (8).

8. Rampensystem (1) nach einem der vorstehenden Anspruche,
**dadurch gekennzeichnet, dass** die mindestens eine Führungsstrebe (20a, 20b) in der Transportposition (12) und in der Auffahrposition (24) auf dem mindestens einen Zwischenelement (6a, 6b) aufliegt.

9. Rampensystem (1) nach einem der Ansprüche 5 bis 8,
**dadurch gekennzeichnet, dass** die vertikalen Außenflächen (30a, 30b) der Führungsstreben (20a, 20b) und die seitlichen Außenflächen (26a, 26b) der Auffahrplatte (8) in der gleichen Ebene angeordnet sind.

10. Rampensystem (1) nach einem der Ansprüche 5 bis 8,
**dadurch gekennzeichnet, dass** ein Zwischenelement (6a, 6b) und eine Führungsstrebe (20a, 20b), welche auf der gleichen Seite der Auffahrplatte (8) angeordnet sind, zusammen eine horizontale Breite von unter 20 mm, besonders bevorzugt unter 15mm aufweisen.

11. Rampensystem (1) nach einem der vorstehenden Ansprüche,
**dadurch gekennzeichnet, dass** der mindestens eine Führungszapfen (16a, 16b) in der Transportposition (12) und in der Auffahrposition (24) in einer ersten Endposition (32) in der mindestens einen Längsführung (18a, 18b) angeordnet ist und/oder der mindestens eine Führungszapfen (16a, 16b) in der Stauposition (14) in einer zweiten Endposition (34) in der mindestens einen Längsführung (18a, 18b) angeordnet ist.

12. Rampensystem (1) nach einem der vorstehenden Ansprüche,
**dadurch gekennzeichnet, dass** die mindestens eine Längsführung (18a, 18b) mindestens teilweise gebogen ausgebildet ist.

13. Rampensystem (1) nach einem der vorstehenden Ansprüche,
**dadurch gekennzeichnet, dass** die mindestens eine Längsführung (18a, 18b) an einem Ende einen Endsitz (36) aufweist, welcher vorzugsweise durch einen 90 Grad Bogen in der Längsführung (18a, 18b) ausgebildet ist.

14. Rampensystem (1) nach einem der vorstehenden Ansprüche,
**dadurch gekennzeichnet, dass** die Auffahrplatte (8) in der Transportposition (12) verriegelbar ist.

15. Rampensystem (1) nach Anspruch 14,
**dadurch gekennzeichnet, dass** ein erster Verriegelungsmechanismus das Verfahren der Auffahrplatte (8) von der Transportposition (12) in die Auffahrposition (24) sperrt und freigibt und/oder ein zweiter Verriegelungsmechanismus das Verfahren der Auffahrplatte (8) von der Transportposition (12) in die Stauposition (14) sperrt und freigibt.

16. Rampensystem (1) nach Anspruch 15,
**dadurch gekennzeichnet, dass** der erste Verriegelungsmechanismus über einen ersten Betätigungshebel (38) einstellbar ist und der zweite Verriegelungsmechanismus über einen zweiten Betätigungshebel (40) einstellbar ist.

17. Fahrzeug (2) zur Beförderung von Rollstuhlfahrern mit einem Rampensystem (1) gemäß einem der vorstehenden Ansprüche.

## Claims

1. A ramp system (1) for installation in a vehicle (2), which permits ride-on access of a mobile object, in particular a wheelchair, into an interior (4) of the vehicle (2), comprising
at least one intermediate element (6a, 6b) which can be coupled to the vehicle (2), and
a ride-on access plate (8) coupled to the at least one intermediate element (6a, 6b), wherein
the ride-on access plate (8) can be moved from a vertical transport position (12) into a horizontal stowage position (14) by means of a rotary movement about a first movable pivot axis (10),
wherein at least one guide pin (16a, 16b), which is guided in a longitudinal guide (18a, 18b) in the at least one intermediate element (6a, 6b), is arranged on the ride-on access plate (8),
**characterised in that** at least one guide strut (20a, 20b) is pivotably mounted between the intermediate element (6a, 6b) and the ride-on access plate (8).

2. A ramp system (1) as set forth in claim 1,
**characterised in that** the ride-on access plate (8) can be moved from an inclined ride-on access position (24) into the vertical transport position (12) by means of a rotary movement about a second pivot axis (22).

3. A ramp system (1) as set forth in claim 1 or claim 2,
**characterised in that** the ride-on access plate (8) is coupled to two intermediate elements (6a, 6b) which are arranged in opposite relationship at the outside surfaces (26a, 26b) of the ride-on access plate (8) and arranged on the ride-on access plate (8) are two guide pins (16a, 16b) which are respectively guided in a longitudinal guide (18a, 18b) of an intermediate element (6a, 6b).

4. A ramp system (1) as set forth in claim 3,
**characterised in that** the two intermediate elements (6a, 6b) are coupled by means of an intermediate plate (7) which in the ride-on access position (24) and in the transport position (12) of the ride-on access plate (8) is arranged substantially parallel to the ride-on access plate (8) and/or in the stowage position (14) of the ride-on access plate (8) is arranged substantially perpendicularly to the ride-on access plate (8).

5. A ramp system (1) as set forth in claim 3 or claim 4,
**characterised by** two guide struts (20a, 20b) which extend parallel and which are coupled to the ride-on access plate (8) and a respective intermediate element (6a, 6b) and which are preferably arranged in mutually opposite relationship at the outside surfaces (26a, 26b) of the ride-on access plate (8).

6. A ramp system (1) as set forth in one of the preceding claims,
**characterised in that** the first movable pivot axis (10) is coincident with the horizontal central axis (28) of the guide pin or pins (16a, 16b).

7. A ramp system (1) as set forth in one of the preceding claims,
**characterised in that** the at least one guide strut (20a, 20b) in the transport position (12) is arranged along a vertical and/or the at least one guide strut (20a, 20b) in the stowage position (14) is arranged inclinedly relative to a vertical and/or the at least one guide strut (20a, 20b) in the ride-on access position (24) is at the same inclination relative to a horizontal as the ride-on access plate (8).

8. A ramp system (1) as set forth in one of the preceding claims,
**characterised in that** the at least one guide strut (20a, 20b) lies on the at least one intermediate element (6a, 6b) in the transport position (12) and in the ride-on access position (24).

9. A ramp system (1) as set forth in one of claims 5 through 8,
**characterised in that** the vertical outside surfaces (30a, 30b) of the guide struts (20a, 20b) and the lateral outside surfaces (26a, 26b) of the ride-on access plate (8) are disposed in the same plane.

10. A ramp system (1) as set forth in one of claims 5 through 8,
**characterised in that** an intermediate element (6a, 6b) and a guide strut (20a, 20b), which are arranged on the same side of the ride-on access plate (8), are together of a horizontal width of below 20 mm, particularly preferably below 15 mm.

11. A ramp system (1) as set forth in one of the preceding claims,
**characterised in that** the at least one guide pin (16a, 16b) in the transport position (12) and in the ride-on access position (24) is disposed in a first end position (32) in the at least one longitudinal guide (18a, 18b) and/or the at least one guide pin (16a, 16b) in the stowage position (14) is disposed in a second end position (34) in the at least one longitudinal guide (18a, 18b).

12. A ramp system (1) as set forth in one of the preceding claims,
**characterised in that** the at least one longitudinal guide (18a, 18b) is at least partially of a curved configuration.

13. A ramp system (1) as set forth in one of the preceding claims,
**characterised in that** at one end the at least one longitudinal guide (18a, 18b) has an end seat (36) which is preferably formed by a 90 degree curve in the longitudinal guide (18a, 18b).

14. A ramp system (1) as set forth in one of the preceding claims,
**characterised in that** the ride-on access plate (8) is lockable in the transport position (12).

15. A ramp system (1) as set forth in claim 14,
**characterised in that** a first locking mechanism locks and enables displacement of the ride-on access plate (8) from the transport position (12) into the ride-on access position (24) and/or a second locking mechanism locks and enables displacement of the ride-on access plate (8) from the transport position (12) into the stowage position (14).

16. A ramp system (1) as set forth in claim 15,
**characterised in that** the first locking mechanism is displaceable by way of a first actuating lever (38) and the second locking mechanism is displaceable by way of a second actuating lever (40).

17. A vehicle (2) for conveying wheelchair users comprising a ramp system (1) as set forth in one of the preceding claims.

## Revendications

1. Système de rampes (1) destiné à être monté dans un véhicule (2), qui permet la montée d'un objet pouvant être déplacé, en particulier d'un fauteuil roulant, dans un espace intérieur (4) du véhicule (2), avec
au moins un élément intermédiaire (6a, 6b), qui peut être couplé au véhicule (2), et
une plaque de montée (8), qui est couplée à l'au moins un élément intermédiaire (6a, 6b), dans lequel la plaque de montée (8) peut être amenée depuis une position de transport (12) verticale dans une position de rangement (14) horizontale au moyen d'un déplacement de rotation autour d'un premier axe de pivotement (10) mobile,
dans lequel au moins un tourillon de guidage (16a, 16b) est disposé au niveau de la plaque de montée (8), lequel est guidé dans une coulisse longitudinale (18a, 18b) dans l'au moins un élément intermédiaire (6a, 6b),
**caractérisé en ce qu'**au moins une entretoise de guidage (20a, 20b) est articulée entre l'élément intermédiaire (6a, 6b) et la plaque de montée (8).

2. Système de rampes (1) selon la revendication 1, **caractérisé en ce que** la plaque de montée (8) peut être amenée depuis une position de montée (24) inclinée dans la position de transport (12) verticale au moyen d'un déplacement en rotation autour d'un deuxième axe de pivotement (22).

3. Système de rampes (1) selon la revendication 1 ou la revendication 2,
**caractérisé en ce que** la plaque de montée (8) est couplée à deux éléments intermédiaires (6a, 6b), qui sont disposés de manière à se faire face au niveau des surfaces extérieures (26a, 26b) de la plaque de montée (8), et deux tourillons de guidage (16a, 16b) sont disposés au niveau de la plaque de montée (8), lesquels sont guidés respectivement dans une coulisse longitudinale (18a, 18b) d'un élément intermédiaire (6a, 6b).

4. Système de rampes (1) selon la revendication 3,
**caractérisé en ce que** les deux éléments intermédiaires (6a, 6b) sont couplés au moyen d'une plaque intermédiaire (7), qui est disposée dans la position de montée (24) et dans la position de transport (12) de la plaque de montée (8) sensiblement de manière parallèle par rapport à la plaque de montée (8) et/ou qui est disposée dans la position de rangement (14) de la plaque de montée (8) sensiblement de manière perpendiculaire par rapport à la plaque de montée (8) .

5. Système de rampes (1) selon la revendication 3 ou la revendication 4,
**caractérisé par** deux entretoises de guidage (20a, 20b), qui s'étendent de manière parallèle et qui sont couplées à la plaque de montée (8) et respectivement à un élément intermédiaire (6a, 6b) et qui sont disposées de préférence de manière à se faire face au niveau des surfaces extérieures (26a, 26b) de la plaque de montée (8).

6. Système de rampes (1) selon l'une quelconque des revendications précédentes,
**caractérisé en ce que** le premier axe de pivotement (10) mobile coïncide avec l'axe central (28) horizontal du tourillon de guidage (16a, 16b) ou des tourillons de guidage (16a, 16b).

7. Système de rampes (1) selon l'une quelconque des revendications précédentes,
**caractérisé en ce que** l'au moins une entretoise de guidage (20a, 20b) est disposée dans la position de transport (12) le long d'une verticale, et/ou l'au moins une entretoise de guidage (20a, 20b) est disposée dans la position de rangement (14) de manière inclinée par rapport à une verticale, et/ou l'au moins une entretoise de guidage (20a, 20b) présente dans la position de montée (24) la même inclinaison par rapport à une horizontale que la plaque de montée (8).

8. Système de rampes (1) selon l'une quelconque des revendications précédentes,
**caractérisé en ce que** l'au moins une entretoise de guidage (20a, 20b) repose, dans la position de transport (12) et dans la position de montée (24), sur l'au moins un élément intermédiaire (6a, 6b).

9. Système de rampes (1) selon l'une quelconque des revendications 5 à 8,
**caractérisé en ce que** les surfaces extérieures (30a, 30b) verticales des entretoises de guidage (20a, 20b) et les surfaces extérieures (26a, 26b) latérales de la plaque de montée (8) sont disposées dans le même plan.

10. Système de rampes (1) selon l'une quelconque des revendications 5 à 8,
**caractérisé en ce qu'**un élément intermédiaire (6a, 6b) et une entretoise de guidage (20a, 20b), qui sont disposés sur le même côté de la plaque de montée (8), présentent conjointement une largeur horizontale inférieure à 20 mm, de manière particulièrement préférée inférieure à 15 mm.

11. Système de rampes (1) selon l'une quelconque des revendications précédentes,
**caractérisé en ce que** l'au moins un tourillon de guidage (16a, 16b) est disposé dans la position de transport (12) et dans la position de montée (24) dans une première position d'extrémité (32) dans l'au moins une coulisse longitudinale (18a, 18b), et/ou l'au moins un tourillon de guidage (16a, 16b) est disposé, dans la position de rangement (14), dans une deuxième position d'extrémité (34) dans l'au moins une coulisse longitudinale (18a, 18b).

12. Système de rampes (1) selon l'une quelconque des revendications précédentes,
**caractérisé en ce que** l'au moins une coulisse longitudinale (18a, 18b) est réalisée de manière au moins en partie courbée.

13. Système de rampes (1) selon l'une quelconque des revendications précédentes,
**caractérisé en ce que** l'au moins une coulisse longitudinale (18a, 18b) présente, au niveau d'une extrémité, un siège d'extrémité (36), qui est réalisé de préférence par une courbe de 90 degrés dans la coulisse longitudinale (18a, 18b) .

14. Système de rampes (1) selon l'une quelconque des revendications précédentes,
**caractérisé en ce que** la plaque de montée (8) peut être verrouillée dans la position de transport (12).

15. Système de rampes (1) selon la revendication 14,
**caractérisé en ce qu'**un premier mécanisme de verrouillage bloque et débloque le déplacement de la plaque de montée (8) depuis la position de transport (12) dans la position de montée (24), et/ou un deuxième mécanisme de verrouillage bloque ou débloque le déplacement de la plaque de montée (8) depuis la position de transport (12) dans la position de rangement (14).

16. Système de rampes (1) selon la revendication 15,
**caractérisé en ce que** le premier mécanisme de verrouillage peut être réglé par l'intermédiaire d'un premier levier d'actionnement (38) et le deuxième mécanisme de verrouillage peut être réglé par l'intermédiaire d'un deuxième levier d'actionnement (40).

17. Véhicule (2) servant au transport de personnes en fauteuil roulant avec un système de rampes (1) selon l'une quelconque des revendications précédentes.
